# EUROPEAN PATENT SPECIFICATION

(11) **EP 0 672 474 B1**
(45) Date of publication and mention of the grant of the patent: **11.02.1998**
(21) Application number: 94109167.0
(22) Date of filing: 15.06.1994
(51) Int. Cl.: B21C 37/08

(54) **Process for manufacturing tubes made of zinc or alloys thereof for sheet metal working**
Verfahren zur Herstellung eines Rohres aus Zink oder aus Zinklegierungen
Procédé pour la fabrication d'un tuyau en zinc ou en alliages de zinc

(30) Priority: 18.02.1994 IT PD940032
(43) Date of publication of application: 20.09.1995
(73) Proprietor: MAZZONETTO S.r.l., I-35018 San Martino di Lupari (Padova) (IT)
(72) Inventor: Mazzonetto, Andrea, I-35018 San Martino di Lupari, Padova (IT); Mazzonetto, Giuseppe, I-35018 San Martino di Lupari, Padova (IT)
(74) Representative: Modiano, Guido, Dr.-Ing.

(56) References cited:
- EP-A- 0 284 141
- DE-A- 3 147 147

## Description

The present invention relates to a process for manufacturing tubes made of zinc or alloys thereof for sheet metal working.

Metal tubes, generally made of copper, stainless steel, aluminum, pre-coated steel, zinc and alloys thereof et cetera, and constituted by sheet metal curved so as to mate two edges and then mutually couple them, are currently known and used in the field of sheet metal working for rain gutters.

In particular, for tubes made of zinc or alloys thereof, the two edges have been mutually joined for many years substantially according to two methods: the first one consists in overlapping the two edges and soft-soldering them, and the second one entails the mechanical seaming of the two edges.

These methods, despite the drawbacks which they cause and which will be mentioned hereinafter, have been considered so far the only ways to obtain qualitatively and economically valid sheet metal tubes.

In the case of soft-soldering with edge overlap, however, there are considerable limits and drawbacks, including the maximum executable length of three meters, the use of more material than strictly necessary to overlap the edges, the need to use an additional material (tin) for soldering with the consequent costs arising therefrom, the unaesthetic appearance of the soldered joint, the limitations in installation caused by its presence, unstable mechanical strength at the joint, and the lack of the possibility to widen the tubes in order to obtain mouthpieces.

In the case of mechanical seaming, the limits and drawbacks include the use of more raw material than strictly necessary due to the seam, the fact that the manufactured tube is not tight since the seam is not sealed, the unaesthetic appearance of the seam, the limitation that it causes in installation, the poor mechanical strength due to the tendency of the material to form a loose seam due to its good elastic properties, and the lack of the possibility to widen the tubes in order to obtain mouthpieces.

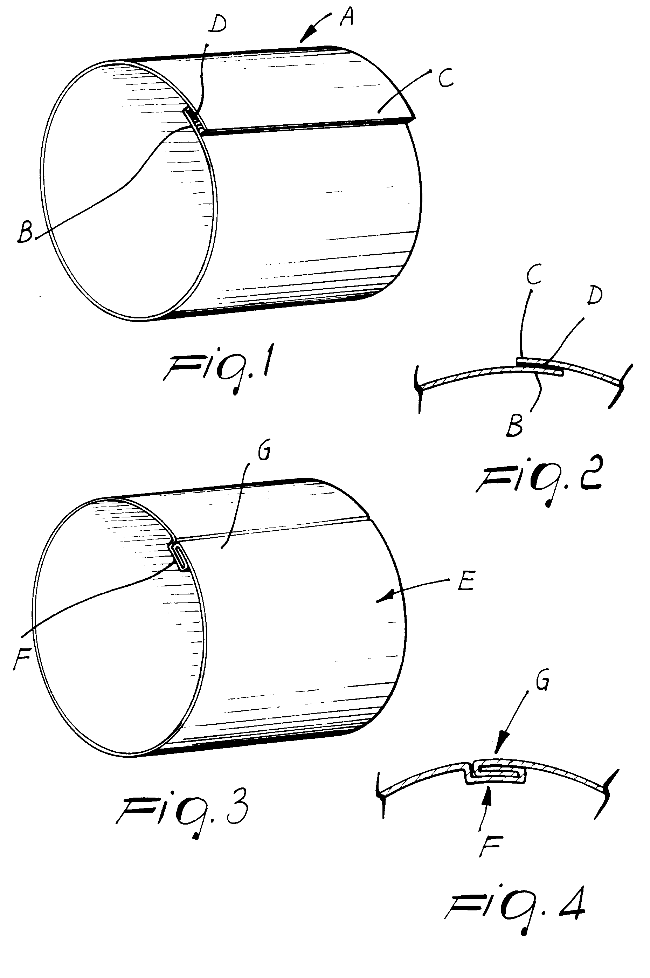

In the accompanying drawings, figures 1 and 2 illustrate a conventional tube A made of zinc for sheet metal working with overlapping edges B and C and a soft-soldered joint D, respectively in a perspective view and in a sectional detail view of the region where the edges overlap and the soldered joint is formed.

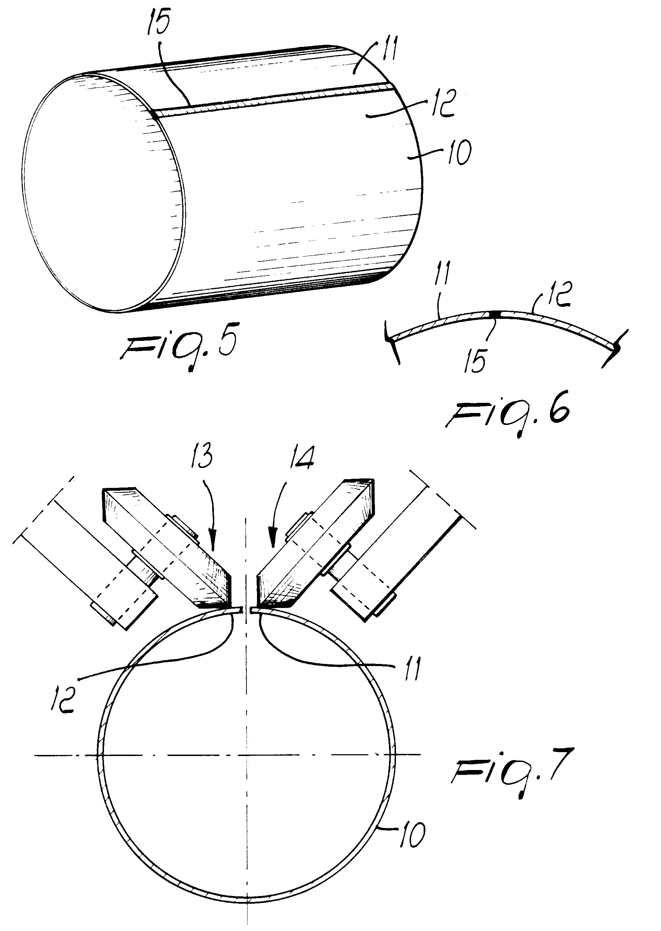

Figures 3 and 4 instead are respectively a perspective view and a sectional detail view, taken at the region where the edges join, of a conventional tube E obtained from a curved plate with mutually seamed edges F and G.

DE-A-31 47 147 discloses a thin-walled tube with a straight seam which is manufactured by roll forming a strip into a tube, and aligning the strip edges of the tube such that a set gap is left between the edges. The gap between the edges is 1/500 to 1/30 of the tube-diameter-to-wall-thickness ratio. The tube is then subjected to an inert-gas-shielded non-consumable electrode welding, with the rate of welding and the welding amperage being selected such that to ensure the heat release in the welding zone to be sufficient to close the gap between the edges due to heat expansion of the tube material and the formation of a weld joint.

EP-A-0 284 141 discloses a process for producing zinc or zinc alloy thin-wall pipes, including rolling a thin sheet of material into a round C-section having a longitudinal slot disposed between mutually facing edges. The C-section is then guided with the facing edges through a relatively short area for heating by means of high frequency induction to a temperature below the melting point of the material, whereafter the longitudinal slot is made to converge in the form of a V-shaped gap converging to a welding point by pushing and joining the heated edges together by means of rollers.

A principal aim of the present invention is to provide a tube made of zinc or alloys thereof for sheet metal working which eliminates the above-described drawbacks in known types.

A consequent primary object is to eliminate overlap joints or unaesthetic seams currently provided in conventional tubes.

Another important object is to use less material to manufacture tubes made of zinc for sheet metal working and thus achieve savings from an economic point of view.

Another important object is to provide a tube that has a perfectly circular cross-section.

Another important object is to provide a tube that allows to eliminate limitations in installation or in forming widened portions for mouthpieces.

Another object is to provide a tube that offers the same mechanical seal in the edge joining region as in the rest of the tube.

Another object is to provide a tube which can be manufactured in unlimited lengths.

In accordance with the invention, there is provided a process for manufacturing tubes as defined in claim 1. The dependent claims describe further embodiments of the invention.

The particular technical characteristics and advantages of the present invention will become apparent from the following detailed description of an embodiment thereof, illustrated only by way of non-limitative example in the accompanying drawings, wherein:
figures 1 to 4, as mentioned, are views of conventional tubes;
figure 5 is a perspective view of a tube according to the invention;
figure 6 is a sectional view of an enlarged-scale detail of the region where the edges of the tube of figure 5 join;
figure 7 is a schematic view of the arrangement of the tube during welding.

With reference to the above figures 5, 6 and 7, a tube made of zinc or alloys thereof for sheet metal working according to the invention comprises a curved plate 10 shaped by continuously forming a basic rolled part so that its width is equal to the intended diameter to be obtained.

The plate 10 is curved so that the edges 11 and 12, which are perfectly clean, are perfectly adjacent and pressed against each other end to end.

The pressing force, provided by means of mutually perpendicular free rollers 13 and 14 which act on the flaps 11 and 12 and are pushed radially with respect to the tube (figure 7), is preferably comprised between 15 and 20 kg.

The two edges 11 and 12 are mutually joined by means of a welded joint 15 provided by continuous melting in controlled-atmosphere conditions (by providing a combustion chamber around the welding region); this melting is obtained by means of the intervention of a 500-Hz TIG generator that produces a controlled and localized heat energy beam.

Atmosphere control is performed to ensure that immediate oxidation does not occur after the melting of the material and to ensure fume control.

The final result is a tube with a perfectly circular cross-section in which it is difficult to visually locate the welding region with respect to the remaining part of the tube.

The manufacture of a tube by butt-welding the edges, which has so far been considered impossible by the experts in the field, has yielded a series of relevant advantages with respect to conventional tubes:
-- the use of a lower amount of material and, consequently, savings in terms of costs;
-- the elimination of additional material;
-- the perfectly circular execution of the tube;
-- the elimination of unaesthetic joining or seaming elements;
-- ease in cutting the tube during installation since the thicker points produced by welding or seaming have been eliminated;
-- the elimination of installation limitations that have so far been due to the presence of the overlap weld or to the seam;
-- the mechanical strength of the weld, which is practically equal to the strength of the rest of the tube, since the butt-welding of the edges by melting does not alter the physical state and the chemical nature of the basic rolled part;
-- the hydraulic tightness of the weld;
-- the possibility to obtain unlimited lengths;
-- the possibility to widen the tubes in order to obtain mouthpieces.

In practice it has been observed that the intended aim and objects of the present invention have been achieved.

The invention thus conceived is susceptible to numerous modifications and variations, all of which are within the scope of the appended claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A process for manufacturing tubes made of zinc or alloys thereof for sheet metal working comprising the steps of:
shaping the tube by continuous forming of a basic rolled part (10);
arranging the edges (11, 12) of the shaped tube mutually side by side and pressing said edges perfectly end to end against each other; and
locally continuously melting the edges arranged in mutual contact in a controlled atmosphere, with fume control and so that immediate oxidation of the material after melting does not occur, with a TIG beam that produces controlled and localized heat energy.

2. The process according to claim 1, wherein the step of melting is carried out such that the melting region of the tube is limited to the longitudinal parts that are adjacent to the line of contact between the two edges (11, 12).

3. The process according to any one or more of the preceding claims, wherein the step of melting is carried out such that said beam producing heat energy is a TIG beam.

4. The process according to any one or more of the preceding claims, wherein the steps of arranging and pressing said edges is carried out such that the force acting on the edges during the step of welding is between 15 and 20 kg.

5. The process according to any one or more of the preceding claims, wherein the pressure on said edges is obtained by means of mutually perpendicular free rollers (13, 14) which act so as to thrust in a radial direction.

6. The process according to any one or more of the preceding claims, wherein the step of melting is carried out in a combustion chamber provided around the welding region.

7. The process according to any one or more of the preceding claims, wherein the step of melting is carried out using a 500-Hz TIC generator producing a controlled and localized heat energy beam.

## Patentansprüche

1. Verfahren zur Herstellung eines Rohres aus Zink-oder aus Zinklegierungen, das folgende Schritte beinhaltet:
ein Formen des Rohres durch kontinuiertiches Verformen eines gerollten Grundkörpers (10);
ein Anordnen der Kanten (11, 12) des geformten Rohres gegenseitig Seite an Seite und Gegeneinanderpressen der Kanten genau, Ende an Ende; und
ein örtliches, kontinuierliches Schmelzen der Kanten, die in gegenseitigem Kontakt angeordnet sind, unter Schutzgas mit einer Rauchkontrolle und derart, daß eine sofortige Oxidation des Materials nach dem Schmelzen nicht auftritt, und mit einem TIG-Strahl, der eine kontrollierte und lokalisierte Hitzeenergie produziert.

2. Verfahren nach Anspruch 1, in dem der Schritt des Schmelzens so ausgeführt wird, daß der Schmelzbereich des Rohres auf die longituinalen Bereiche begrenzt ist, die an die Stoßlinie zwischen den beiden Kanten (11, 12) angrenzen.

3. Verfahren nach einem oder mehreren der vorangehenden Ansprüche, wobei der Schritt des Schmelzens so ausgeführt wird, daß der die Hitzeenergie produzierende Strahl ein TIG-Strahl ist.

4. Verfahren nach einem oder mehreren der vorangehenden Ansprüche, wobei die Schritte des Anordnens und Gegeneianderpressens der Kanten so ausgeführt ist, daß die Kraft, die auf die Kanten einwirkt, während des Schrittes des Schweißens zwischen 15 und 20 kg liegt.

5. Verfahren nach einem oder mehreren der vorangehenden Ansprüche, wobei der Druck auf die Kanten durch senkrecht aufeinanderstehende freie Rollen (13, 14) erhalten wird, die so wirken, daß sie in radialer Richtung drücken.

6. Verfahren nach einem oder mehreren der vorangehenden Ansprüche, wobei der Schritt des Schmelzens in einer Brennkammer ausgeführt wird, die um den Schweißbereich angeordnet ist.

7. Verfahren nach einem oder mehreren der vorangehenden Ansprüche, wobei der Schritt des Schmelzens durch die Verwendung eines 500-Hz TIG-Generators ausgeführt wird, der einen kontrollierten und lokalisierten Hitzeenergiestrahl produziert.

## Revendications

1. Procédé de fabrication de tubes constitués de zinc, ou d'alliages de celui-ci, destiné au travail de métaux en feuille, comportant les étapes consistant à :
mettre en forme le tube en formant en continu une partie roulée de base (10),
agencer les bords (11, 12) dudit tube mis en forme, mutuellement côte à côte, et appuyer lesdits bords parfaitement bout à bout l'un contre l'autre, et
faire fondre en continu localement les bords agencés en contact mutuel sous une atmosphère commandée, avec commande des fumées et de sorte qu'une oxydation immédiate du matériau après fusion ne survienne pas, à l'aide d'un faisceau TIG qui produit une énergie thermique commandée et localisée.

2. Procédé selon la revendication 1, dans lequel l'étape de fusion est exécutée de telle sorte que la zone de fusion du tube soit limitée aux parties longitudinales qui sont adjacentes à la ligne de contact existant entre les deux bords (11, 12).

3. Procédé selon l'une quelconque des revendications précédentes, dans lequel l'étape de fusion est exécutée de telle sorte que ledit faisceau produisant de l'énergie thermique soit un faisceau TIG.

4. Procédé selon l'une quelconque des revendications précédentes, dans lequel les étapes consistant à agencer et appuyer lesdits bords est exécutée de telle sorte que la force agissant sur les bords pendant l'étape de soudure est comprise entre 15 et 20 kg.

5. Procédé selon l'une quelconque des revendications précédentes, dans lequel la pression exercée sur lesdits bords est obtenue par l'intermédiaire de rouleaux libres mutuellement perpendiculaires (13, 14) qui agissent de manière à pousser dans une direction radiale.

6. Procédé' selon l'une quelconque des revendications précédentes, dans lequel l'étape de fusion est exécutée dans une chambre de combustion agencée autour de la zone de soudage.

7. Procédé selon l'une quelconque des revendications précédentes, dans lequel l'étape de fusion est exécutée en utilisant un générateur TIG à 500 Hz produisant un faisceau d'énergie thermique commandé et localisé.
